# EUROPÄISCHE PATENTSCHRIFT

(11) **EP 1 989 045 B1**
(45) Veröffentlichungstag und Bekanntmachung des Hinweises auf die Patenterteilung: **21.10.2009**
(21) Anmeldenummer: 07702859.5
(22) Anmeldetag: 18.01.2007
(51) Int. Cl.: B32B 3/26, E06B 3/20

(54) **KANTENSCHUTZBAND ZUM SCHUTZ DER RÄNDER VON MEHRFACHGLASSCHEIBEN, INSBESONDERE BRANDSCHUTZSCHEIBEN**
EDGE-PROTECTING BAND FOR PROTECTING THE EDGES OF MULTILAYER GLASS PANES, IN PARTICULAR FIRE-RESISTANT GLASS PANES
BANDE PROTÈGE-ARÊTE DESTINÉE À PROTÉGER LES BORDS DE VITRES MULTICOUCHES, EN PARTICULIER DE VITRES COUPE-FEU

(30) Priorität: 01.03.2006 DE 202006003156 U
(43) Veröffentlichungstag der Anmeldung: 12.11.2008
(73) Patentinhaber: K.M.B. Klebetechnik GMBH, 44357 Dortmund (DE)
(72) Erfinder: ZOROWIK, Peter, Johannes, 44357 Dortmund (DE); KAISER, Klaus, 58300 Wetter (DE)
(74) Vertreter: Meinke, Dabringhaus und Partner GbR
(86) Internationale Anmeldenummer: PCT/EP2007/000415
(87) Internationale Veröffentlichungsnummer: WO 2007/101499

(56) Entgegenhaltungen:
- EP-A- 0 384 462
- EP-A2- 1 090 969
- WO-A-00/29702
- DE-A1- 1 945 291
- DE-C1- 10 222 562
- DE-U1-202004 001 010
- DE-U1-202005 001 617
- FR-A- 2 340 439

## Beschreibung

Die Erfindung richtet sich auf ein Kantenschutzband der im Oberbegriff des Anspruches 1 angegebenen Gattung.

Ausgehend von einem Kantenschutzband wie es in dem DE-20 2004 001 010-U oder dem DE-20 2005 001 617-U der Anmelderin beschrieben ist, das insbesondere zur Aufbringung auf den Rändern von Mehrschicht-Brandschutzgläsern entwickelt wurde, liegt das Ziel der vorliegenden Erfindung darin, die Randkanten, d.h. hier das Kantenschutzband, gegen Schmutzpartikel od. dgl. möglichst widerstandsfähig zu gestalten.

Eine solche Widerstandsfähigkeit ist notwendig, da die Glasscheiben insbesondere beim Einbau auf den Baustellen einer Mehrzahl von Beanspruchungen unterworfen sind, wobei es insbesondere auch zur Aufnahme von Schmutzpartikeln an den Rändern vor Einbau der Glasscheiben kommen kann, die zur Zerstörung des Kantenschutzbandes im schlechtesten Falle führen könnten, so dass es zum Eindringen von Feuchtigkeit zwischen die einzelnen Scheibenlagen und dem dazwischen liegenden Alkalisilikat oder einem ähnlichen Werkstoff kommen könnte.

Um dieser Zielsetzung gerecht zu werden, sieht die Erfindung vor, dass im Bandinneren eine Art Dämpfungsschicht, d.h. eine Schicht erhöhter Dämpfungsfähigkeit, insbesondere aus einem Schaumstoff, vorgesehen ist. Die Schicht erhöhter Dämpfungsfähigkeit kann in Ausgestaltung auch aus einer in der Dicke stark vergrößerten Kleberschicht (50 bis 300µm) gegenüber einer Standarddicke einer Kleberschicht (3 bis 30 µm) gebildet sein.

Das Vorsehen einer Schicht aus einem Schaumstoff im Inneren des Kantenschutzbandes erhöht dessen Dämpfungsfähigkeit in ganz besonderem Maße, d.h. auch kleine Schmutzpartikel, etwa Sandkörner od. dgl., können problemlos absorbiert werden, ohne dass es zu Verletzungen an der äußeren, das Eindringen von Feuchtigkeit verhindernden Folie kommen kann. Der Schaumstoff dient als eine Art Puffer.

Zum Verkleben der Kanten von Glasscheiben sei allgemein noch auf die EP 0 384 462 A, DE 102 22 562 C, FR 2 340 439 A, DE 19 45 291 A, WO 00/29702 A, oder auf die EP 1 090 969 A hingewiesen.

Ausgestaltungen der Erfindung ergeben sich aus den Unteransprüchen. Dabei kann vorgesehen sein, dass der Schaumstoff von einer PE-Schaumstofffolie gebildet ist.

Zweckmäßig ist vorgesehen, dass der Schaum aus einem geschlossenzelligen Schaum gebildet ist, wobei auch vorgesehen sein kann, dass der geschlossenzellige Schaum als Diffusionssperre und/oder mechanische Sperre ausgebildet ist, wie dies weiter oben schon erwähnt wurde.

Es hat sich gezeigt, dass die Polyester- bzw. Polypropylen-Außenschicht noch je nach Einsatzzweck mit weiteren Elementen bestückbar sein soll. Dabei sieht die Erfindung in weiterer Ausgestaltung vor, dass auf der äußeren Gleitfolie eine Kaschierkleberschicht und darauf eine Al-Folie aufgebracht ist.

Die zusätzlich aufgebrachte Aluminiumfolie kann unterschiedlichen Zwecken dienen. Einer dieser Zwecke besteht erfindungsgemäß darin, eine Art Haftvermittler zur Verfügung zu stellen für eine darauf noch bauseitig anzubringende Dichtmasse.

Weitere Merkmale, Einzelheiten und Vorteile der Erfindung ergeben sich aufgrund der nachfolgenden Beschreibung sowie anhang der Zeichnung. Diese zeigt in
- Fig. 1: einen stark vergrößerten Querschnitt durch ein Kantenschutzband,
- Fig. 2: in gleicher Darstellung wie Fig. 1 ein anderes Ausführungsbeispiel eines Kantenschutzbandes,
- Fig. 3: in gleicher Darstellung wie Fig. 1 ein weiteres Ausführungsbeispiel des Kantenschutzbandes sowie in
- Fig. 4: in gleicher Darstellung wie Fig. 1 eine zusätzliche Variante des erfindungsgemäßen Kantenschutzbandes.

Die Zeichnungen zeigen den Aufbau je eines Kantenschutzbandes, wobei aus Darstellungsgründen die Dicke der einzelnen Schichten sehr stark vergrößert ist.

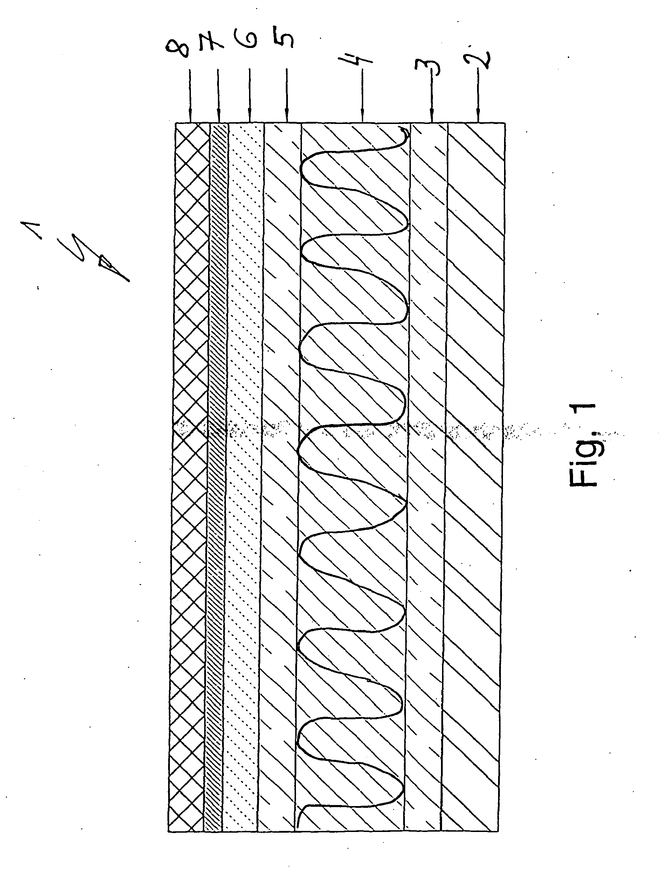

Bei dem in Fig. 1 dargestellten Beispiel besteht der Aufbau des allgemein mit 1 bezeichneten Kantenschutzbandes von unten nach oben aus einer Schicht 1 aus Silikonpapier 2, einer Kleberschicht 3, einer dämpfenden PE-Schaumstoffschicht 4, die von einer Kleberschicht 5 bedeckt ist.

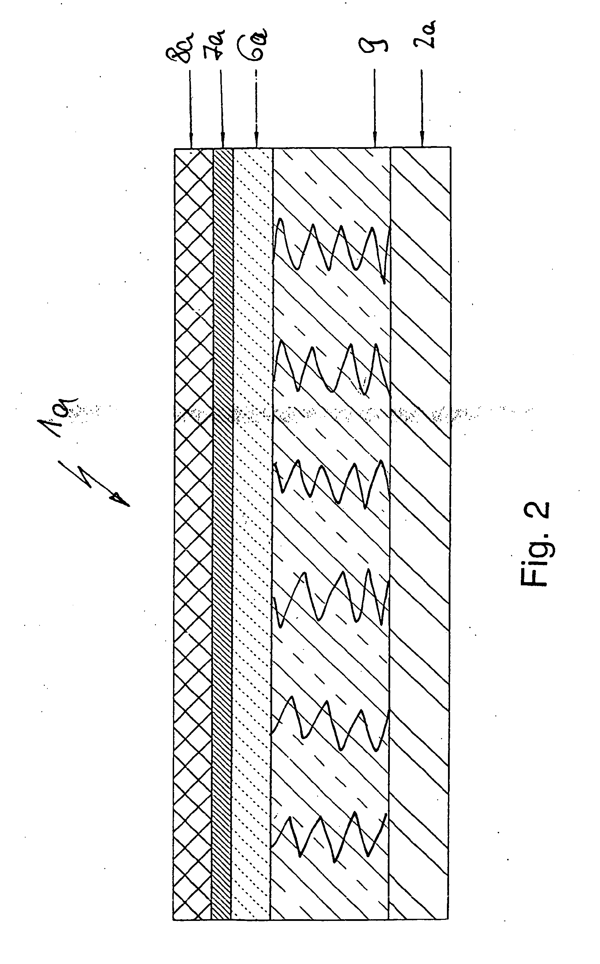

Der Kleberschicht 5 folgt im dargestellten Beispiel nach Fig. 1, wobei dieser Aufbau mit demjenigen der Fig. 2 identisch ist, eine Aluminiumfolie 6, eine Kaschierkleberschicht 7 und schließlich die Außenschicht 8, die beispielsweise aus Polypropylen oder auch Polyester gebildet sein kann.

Je nach Art der nach außen weisenden Schutzfolie 8 kann diese zur besseren Haftvermittlung der Kleberkaschierung vorab zusätzlich behandelt sein, wie dies bei derartigen Folien nicht unüblich ist, etwa mit einem Haftlack versehen sein, ionisiert worden sein od. dgl.

Die jeweiligen Schichtstärken können wie folgt angegeben werden:

| | |
|---|---|
| 2 | (Standardstärke) |
| 3 | (20 bis 100 µm) |
| 4 | (10 bis 500 µm) |
| 5 | (20 bis 100 µm) |
| 6 | (20 bis 100 µm) |
| 7 | (3 bis 30 µm) |
| 8 | (20 bis 100 µm) |

In Fig. 2 ist ein abgewandeltes Beispiel eines Kantenschutzbandes 1a dargestellt, wobei gleiche Elemente das gleiche Bezugszeichen wie in Fig. 1 tragen, ergänzt durch den kleinen Buchstaben "a".

Im Beispiel der Fig. 2 folgt einer Silikonpapierabdeckung 2a eine überdimensionierte Kleberschicht 9, deren Dämpfungsverhalten durch kleine Federsymbole lediglich aus Darstellungsgründen angedeutet ist.

Die dämpfende, überdimensionierte Kleberschicht 9 wird abgedeckt von einer Aluminiumfolie 6a, gefolgt von einer Kaschierkleberschicht 7a und einer äußeren Schicht 8a, z.B. aus Polypropylen. Sie könnte theoretisch auch aus einem Polyethylen-Material bestehen.

Die Stärken dieser Schichten werden im Folgenden aufgeführt:

| | |
|---|---|
| 2a | (Standardstärke) |
| 9 | (50 bis 300 µm) |
| 6a | (20 bis 100 µm) |
| 7a | (3 bis 30 µm) |
| 8a | (20 bis 100 µm) |

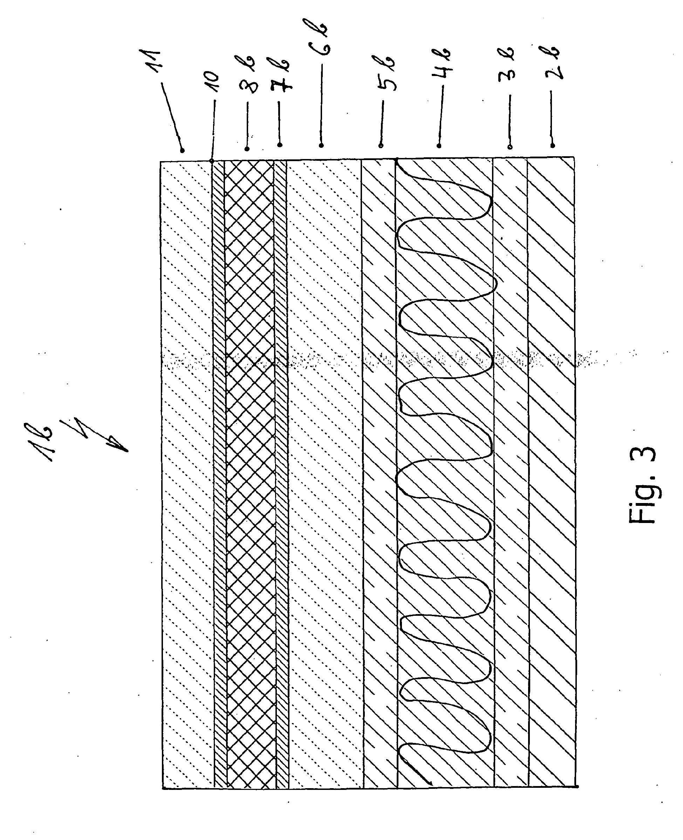

In Fig. 3 ist das dargestellte Kantenschutzband 1b, was die Schichten 2 bis 8 angeht, in gleicher Weise aufgebaut wie das Kantenschutzband 1.

Zusätzlich ist hier auf die äußere Polyester- bzw. Polypropylen-Folie 8 eine Kleberschicht 10 aufkaschiert und hierauf wiederum eine Aluminiumfolie 11, die bei dieser Ausführungsform die Außenschicht bildet.

Die Stärken der einzelnen Schichten des Kantenschutzbandes 1c sind dabei die folgenden:

| | |
|---|---|
| 2b | (Standardstärke) |
| 3b | (20 bis 100 µm) |
| 4b | (10 bis 500 µm) |
| 5b | (20 bis 100 µm) |
| 6b | (20 bis 100 µm) |
| 7b | (3 bis 30 µm) |
| 8b | (20 bis 100 µm) |
| 10 | (3 bis 50 µm) |
| 11 | (5 bis 100 µm) |

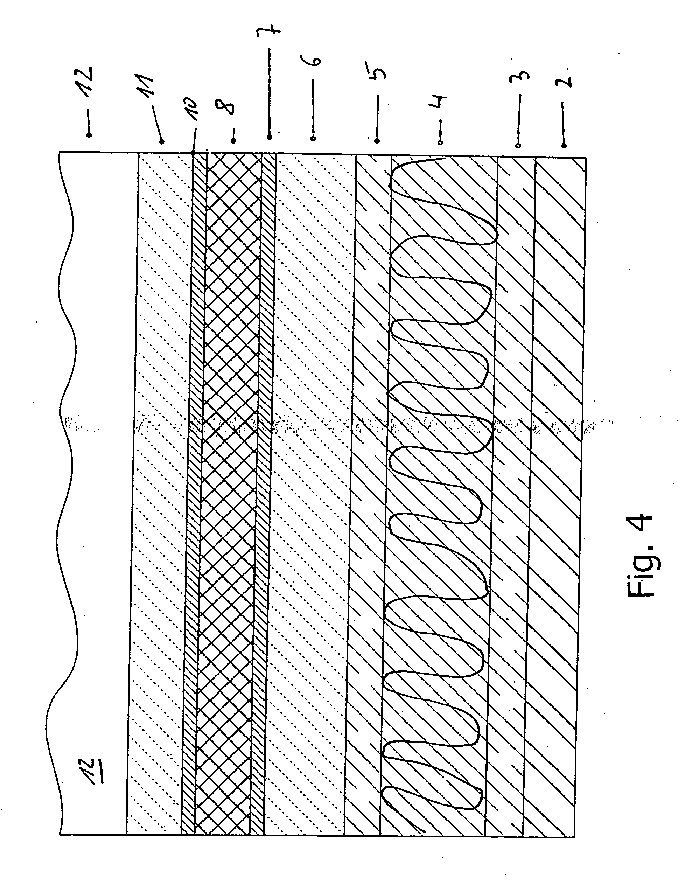

In Fig. 4 ist schließlich das gleiche Kantenschutzband 1c wiedergegeben wie in Fig. 3, allerdings ist hier noch eine äußere, mit 12 bezeichnete Zweikomponenten-Dichtmasse aufgetragen, mit der kurz vor dem Einbau die so präparierten Scheiben versehen werden können.

Die Stärke dieser Butyl- bzw. Zweikomponenten-Dichtmasse 12 ist vom jeweiligen Anwendungsfall abhängig.

Natürlich können die beschriebenen Ausführungsbeispiele der Erfindung noch in vielfacher Hinsicht abgeändert werden, ohne den Grundgedanken zu verlassen. Dies gilt insbesondere für die oben angegebenen Stärken der Dämpfungsschicht und der nach außen weisenden Gleitfolie.

## Patentansprüche

1. Kantenschutzband (1) zum Schutz der Ränder von Mehrfachglasscheiben, insbesondere Brandschutzscheiben, wobei das Kantenschutzband mehrschichtig ausgebildet ist mit einer von einem Silikonpapier (2) abgedeckten Kleberschicht (3), einer Aluminiumfolie (6) mit Kleberschicht (7) sowie einer in der Gebrauchslage nach außen weisenden Gleitfolie (8) aus PET oder PE (Polyethylen), Polyester oder PP (Polypropylen),
**dadurch gekennzeichnet,**
**dass** im Bandinneren eine Dämpfungsschicht (4 oder 9) erhöhter Dämpfungsfähigkeit vorgesehen ist.

2. Kantenschutzband nach Anspruch 1,
**dadurch gekennzeichnet,**
**dass** die Dämpfungsschicht (4) von einem Schaumstoff gebildet ist.

3. Kantenschutzband nach Anspruch 2,
**dadurch gekennzeichnet,**
**dass** die Dämpfungsschicht (9) von einer in der Dicke stark vergrößerten Kleberschicht (50 bis 300 µm) gegenüber einer Standardkleberschicht (3 bis 30 µm) gebildet ist (Fig. 2).

4. Kantenschutzband nach Anspruch 2,
**dadurch gekennzeichnet,**
**dass** der Schaumstoff (4) von einer PE-Schaumstofffolie gebildet ist.

5. Kantenschutzband nach Anspruch 4,
**dadurch gekennzeichnet,**
**dass** der Schaum (4) aus einem geschlossenzelligen Schaum gebildet ist.

6. Kantenschutzband nach Anspruch 5,
**dadurch gekennzeichnet,**
**dass** der geschlossenzellige Schaum (4) als Diffusionssperre und/oder mechanische Sperre ausgebildet ist.

7. Kantenschutzband nach Anspruch 3,
**dadurch gekennzeichnet,**
**dass** die Dicke der dämpfenden Kleberschicht (9) im Bereich von 50 bis 300 µm liegt.

8. Kantenschutzband nach Anspruch 1 oder einem der folgenden,
**dadurch gekennzeichnet,**
**dass** auf der Gleitfolie (8 bzw. 8b) eine Kaschierkleberschicht (9) [Fig. 3] und darauf eine Al-Folie (10) aufgebracht ist.

9. Kantenschutzband nach Anspruch 8,
**dadurch gekennzeichnet,**
**dass** auf der Al-Folie (10) als Haftvermittler eine Dichtmasse (11) [Fig. 4] vorgesehen ist.

## Claims

1. An edge protection strip (1) for protecting the edges of multi-layer glass panes, in particular fire-resistant panes, wherein the edge protection strip is of a multi-layer configuration with an adhesive layer (3) covered by a silicone paper (2), an aluminium film (6) with an adhesive layer (7), and a slide film (8) of PET or PE (polyethylene), polyester or PP (polypropylene), which faces outwardly in the position of use, **characterised in that** provided in the strip interior is a damping layer (4 or 9) of increased damping capability.

2. An edge protection strip according to claim 1 **characterised in that** the damping layer (4) is formed by a foam.

3. An edge protection strip according to claim 2 **characterised in that** the damping layer (9) is formed by an adhesive layer which is greatly increased in thickness (50 to 300 µm) in relation to a standard adhesive layer (3 to 30 µm) (Figure 2).

4. An edge protection strip according to claim 2 **characterised in that** the foam (4) is formed by a PE foam film.

5. An edge protection strip according to claim 2 **characterised in that** the foam (4) is formed from a closed-cell foam.

6. An edge protection strip according to claim 5 **characterised in that** the closed-cell foam (4) is in the form of a diffusion barrier and/or mechanical barrier.

7. An edge protection strip according to claim 3 **characterised in that** the thickness of the damping adhesive layer (9) is in the region of 50 to 300 µm.

8. An edge protection strip according to claim 1 or one of the following claims **characterised in that** applied to the slide film (8 or 8b) is a lining adhesive layer (9) [Figure 3] and thereon an Al film (10).

9. An edge protection strip according to claim 8 **characterised in that** a sealing material (11) is provided on the Al film (10) as a bonding primer [Figure 4].

## Revendications

1. Bande protège-arête (1) destinée à protéger les bords de vitres multicouches, en particulier des vitres coupe-feu, la bande protège-arête étant réalisée en plusieurs couches avec une couche adhésive (3) recouverte d'un papier siliconé (2), avec une feuille d'aluminium (6) avec couche adhésive (7) ainsi qu'avec un film de glissement (8) en PET ou PE (polyéthylène), polyester ou PP (polypropylène) dirigé vers l'extérieur dans la position d'utilisation,
**caractérisée en ce que**
une couche d'amortissement (4 ou 9) à capacité d'amortissement accrue est prévue à l'intérieur de la bande.

2. Bande protège-arête selon la revendication 1,
**caractérisée en ce que**
la couche d'amortissement (4) est formée d'une mousse.

3. Bande protège-arête selon la revendication 2,
**caractérisée en ce que**
la couche d'amortissement (9) est formée d'une couche adhésive à épaisseur fortement augmentée (50 à 300 µm) par rapport à une couche adhésive standard (3 à 30 µm) (figure 2).

4. Bande protège-arête selon la revendication 2,
**caractérisée en ce que**
la mousse (4) est formée d'une feuille de mousse en PE.

5. Bande protège-arête selon la revendication 4,
**caractérisée en ce que**
la mousse (4) est constituée d'une mousse à cellules fermées.

6. Bande protège-arête selon la revendication 5,
**caractérisée en ce que**
la mousse à cellules fermées (4) est réalisée sous forme de barrière de diffusion et/ou de barrière mécanique.

7. Bande protège-arête selon la revendication 3,
**caractérisée en ce que**
l'épaisseur de la couche adhésive d'amortissement (9) se trouve dans la plage allant de 50 à 300 µm.

8. Bande protège-arête selon la revendication 1 ou l'une quelconque des revendications suivantes,
**caractérisée en ce que**
une couche adhésive contrecollée (9) est appliquée sur le film de glissement (8 ou 8b) (figure 3) et sur celle-ci une feuille d'aluminium (10).

9. Bande protège-arête selon la revendication 8,
**caractérisée en ce que**
une masse d'étanchéité (11) est prévue comme agent adhésif sur la feuille d'aluminium (10) (figure 4).
